# EUROPEAN PATENT APPLICATION

(11) **EP 1 510 504 A1**
(43) Date of publication of application: **02.03.2005**
(21) Application number: 04104105.4
(22) Date of filing: 26.08.2004
(51) Int. Cl.: C03C 3/095, C03C 4/08

(54) **Sharpcut Filter Glass and Sharpcut Filter**

(30) Priority: 29.08.2003 JP 2003307334
(71) Applicant: HOYA CORPORATION, Shinjuku-ku, Tokyo 161-8525 (JP)
(72) Inventor: Hachitani, Youichi, Shinjuku-ku Tokyo,Tokyo 161-8525 (JP)
(74) Representative: Meyers, Hans-Wilhelm, Dr.Dipl.-Chem.

(57) **Abstract**

Glass suited to use in sharpcut filters cutting ultraviolet radiation, and sharpcut filters. The sharpcut filter glass comprises, given as weight percentages: SiO₂ 50 to 70 %, Al₂O₃ 0 to 5 %, Li₂O 0 to 10 %, Na₂O 0 to 20 %, K₂O 0 to 20 %, where Li₂O + Na₂O + K₂O comprises 10 to 30 %, ZnO 8 to 20 %, CeO₂ 1 to 5 %. The glass essentially does not comprise Pb, As, and Ti. The sharpcut filter exhibits, according to JIS B7113, the transmission threshold wavelength falling within a range of from 365 to 385 nm and the wavelength inclination range being less than or equal to 35 run.

## Description

### [Technical Field]

The present invention relates to glass suited to use in sharpcut filters cutting ultraviolet radiation, and to sharpcut filters.

### [Technical Background]

Filters having the property of cutting light below a certain wavelength and fully passing light above that wavelength, known as sharpcut filters, are employed to cut ultraviolet radiation in photography and spectroscopic devices, for example.

Glass containing cerium oxide (Japanese Unexamined Patent Publication (KOKAI) No. 2001-89185, Japanese Patent No. 3,084,769, Japanese Unexamined Patent Publication (KOKAI) Heisei No. 7-242438) is known to absorb/cut ultraviolet radiation. Cerium oxide exhibits strong absorption in the vicinity of 310 nm. Obtaining glass absorbing light of wavelengths of 350 nm and above requires the incorporation of a large quantity of cerium oxide. However, the incorporation of a large quantity of cerium oxide into the glass extends absorption into the visible light range, causing the glass to assume a yellow or brown. Since such glass cuts visible light in addition to ultraviolet radiation, its ability to selectively block just ultraviolet radiation (sharpcut property) is poor.

Lead oxide is a useful component for achieving sharpcut properties when employed to complement absorption by cerium oxide. For example, the *Glass Handbook* (1982 edition, Asakura Shoten, pp. 1,022-1,023) describes an ultraviolet-absorbing colorless glass obtained by incorporating Ce into lead glass. Lead oxide is also useful to enhance glass melt moldability and chemical durability. Thus, the use of glass containing cerium oxide and lead oxide as an ultraviolet-cutting filter has been proposed.

Glass containing harmful substances such as Pb, As, Cd, and Cr greatly increases the burden on the environment and has thus not been accepted by the market in recent years. That is, problems have been pointed out, such as the fact that rivers are polluted when just some of the harmful components in shavings and waste water that are generated when polishing such glass are discharged without processing, and the fact that harmful components dissolve out when filter glass is exposed for extended periods to wind and rain.

Thus, the current trend in some quarters has been to stop manufacturing and selling these glasses and devices employing such glasses, and to replace them with other materials such as plastic. However, plastic has numerous poor properties relative to glass, such as transmission characteristics and durability, and is problematic in that it does not deliver original device performance.

Based on the current state of affairs, the objects of the present invention are to provide a sharpcut filter glass affording sharpcut properties as good as or better than those of sharpcut filters employing both cerium oxide and lead oxide, rendered environmentally sound by not containing harmful components that must be eliminated due to their environment effects, and to provide a sharpcut filter.

The present inventors conducted extensive research into obtaining a sharpcut filter glass that was not just free of harmful components, but also had good transmission characteristics while retaining or affording enhanced chemical durability, resistance to devitrification, and melt moldability. As a result, they discovered that optimizing the glass composition made it possible to obtain glass having the desired characteristics without incorporating harmful components that must be eliminated due to their environmental effects, such as Pb and As; the present invention was devised on that basis.
That is, the present invention achieves the above-stated objects in the following manner.

### Summary of the Invention

(1) A sharpcut filter glass characterized by comprising, given as weight percentages:

| | |
|---|---|
| SiO₂ | 50 to 70 %, |
| Al₂O₃ | 0 to 5 %, |
| Li₂O | 0 to 10 %, |
| Na₂O | 0 to 20 %, |
| K₂O | 0 to 20 %, |
| (where Li₂O + Na₂O + K₂O comprises 10 to 30 %) | |
| ZnO | 8 to 20 %, |
| CeO₂ | 1 to 5 % |

and by essentially not comprising Pb, As, and Ti.
(2) The sharpcut filter glass according to (1) wherein the wavelength corresponding to the midpoint between the wavelength at which the spectral transmittance over the wavelengths of from 200 to 700 nm as calculated based on a thickness of 2.5 mm becomes 5 % and the wavelength at which this spectral transmittance becomes 72 % falls within a range of from 365 to 385 nm, and the interval between the 5 % and 72 % spectral transmittance wavelengths is less than or equal to 35 nm.
(3) A sharpcut filter glass comprising CeO₂ and ZnO and having a hue according to JIS B7113 that is colorless, characterized in that the content of CeO₂ is greater than or equal to 1 wt%, the content of ZnO is greater than or equal to 8 wt%, and essentially no Pb, As, and Ti is contained.
(4) The sharpcut filter glass according to (3) comprising SiO₂ and an alkali metal oxide.
(5) A sharpcut filter characterized by being comprised of any of the glasses according to (1) to (4).
(6) The sharpcut filter according to (5) characterized in that the transmission threshold wavelength falls within a range of from 365 to 385 nm and the wavelength inclination range is less than or equal to 35 nm according to JIS B7113.

### [Brief Description of the Drawings]

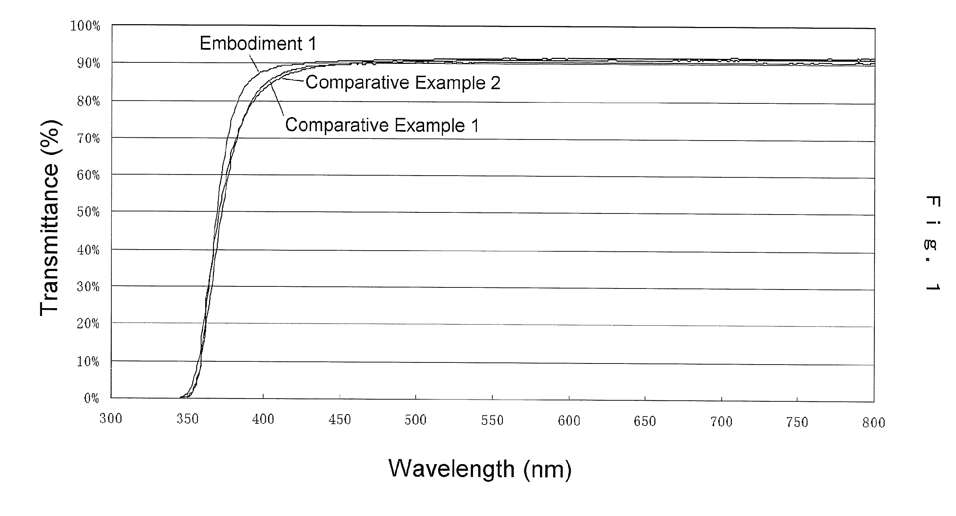

Fig. 1 shows spectral transmittance curves for the glasses of Embodiment 1 and Comparative Examples 1 and 2.

The present invention provides an environmentally sound sharpcut filter glass not containing harmful components that must be avoided due to their environmental effects, such as Pb and As; and a sharpcut filter.
The present invention further provides a sharpcut filter having a good ultraviolet-cutting property in the form of a transmission threshold wavelength according to JIS B7113 of from 365 to 385 nm, a wavelength inclination range of less than or equal to 35 nm, good sharpcut properties, good resistance to devitrification without exhibiting a liquid phase temperature, and good chemical durability; as well as glass for obtaining such a filter.

### [Best Mode of Implementing the Invention]

The present invention is described in greater detail below.

### (Mode 1)

The sharpcut filter glass of mode 1 of the present invention is characterized by comprising:

| | |
|---|---|
| SiO₂ | 50 to 70 %, |
| Al₂O₃ | 0 to 5 %, |
| Li₂O | 0 to 10 %, |
| Na₂O | 0 to 20 %, |
| K₂O | 0 to 20 %, |
| (where Li₂O + Na₂O + K₂O comprises 10 to 30 %) | |
| ZnO | 8 to 20 %, |
| CeO₂ | 1 to 5 % |

and by essentially not comprising Pb, As, or Ti.

The reasons for limiting the composition ranges of the individual components of the glass of mode 1 of the present invention are given below. In the description below, the contents of the various components are given as weight percentages.
Si₂O is a basic component of glass. It is important for enhancing the thermal stability and chemical durability of the glass. When the content thereof is less than 50 %, thermal stability and chemical durability deteriorate. Conversely, when 70 % is exceeded, melting tends to become difficult. Accordingly, the SiO₂ content of the sharpcut filter glass of the present invention is from 50 to 70 %, desirably from 55 to 65 %.

Al₂O₃ is an effective component for suppressing phase separation and devitrification of the glass. When the content thereof exceeds 5 %, the liquid phase temperature increases and melt molding tends to become difficult. Accordingly, the content of Al₂O₃ is from 0 to 5 %, desirably from 0 to 2 %.

Li₂O is a component that enhances the properties of the glass melt. When the content thereof exceeds 10 %, the chemical durability of the glass tends to deteriorate. Thus, the Li₂O content is from 0 to 10 %, desirably from 0 to 5 %.

Na₂O is a component that enhances glass melt properties. When the content thereof exceeds 20 %, the chemical durability of the glass tends to deteriorate. Accordingly, the content of Na₂O is from 0 to 20 %, desirably from 5 to 15 %.

K₂O is also a component that enhances glass melt properties. When the content thereof exceeds 20 %, the chemical durability of the glass tends to deteriorate. Accordingly, the content of K₂O is from 0 to 20 %, desirably from 5 to 15 %.

When the combined content of Li₂O, Na₂O, and K₂O is less than 10 %, the viscosity of the glass increases or the liquid phase temperature rises, tending to hinder melt molding. Conversely, when the combined content exceeds 30 %, chemical durability tends to deteriorate. Accordingly, the combined content of Li₂O, Na₂O, and K₂O is from 10 to 30 %. The combined content of Li₂O, Na₂O, and K₂O is desirably from 15 to 25 %.

ZnO is a component that effectively enhances glass melt moldability, resistance to devitrification, and chemical durability by complementing absorption by CeO₂ while ensuring transmittance over the visible light range without the incorporation of PbO. When the ZnO content is less than 8 %, this effect is not achieved. Conversely, when the content exceeds 20 %, mechanical strength tends to drop. Accordingly, the content of ZnO is from 8 to 20 %. The content of ZnO is desirably from 13 to 18 %.

CeO₂ is an essential component for absorbing ultraviolet radiation. A CeO₂ content of less than 1 % precludes the effective blocking of ultraviolet radiation. Conversely, a content exceeding 5 % tends to compromise sharp cutting properties. Accordingly, the CeO₂ content is from 1 to 5 %, desirably from 1.5 to 3.5 %. The use of a glass containing CeO₂ in a quantity falling within this range results in a sharpcut filter having a transmission threshold wavelength based on JIS B7113, described further below, falling within the range of 365 to 385 nm and a wavelength inclination range of less than or equal to 35 nm.

Optional components in the form of B₂O₃, Sb₂O₃, ZrO₂, SnO₂, MgO, CaO, SrO, and BaO may also be suitably incorporated into the glass of mode 1 of the present invention within a range of less than 5 % to enhance melt moldability, improve chemical durability, enhance refining and resistance to devitrification, adjust transmittance, and the like.

The glass of mode 1 of the present invention essentially does not comprise Pb or As due to the above-described environmental effects. In the present invention, the term "essentially does not comprise" means that these elements are not employed as glass starting materials, but does not exclude their incorporation as impurities. However, the use of glass starting materials with low contents of these elements as impurities is naturally desirable.

Ti is a component that greatly increases the wavelength inclination range through interaction with CeO₂, extending absorption to the visible light range and causing the glass to develop a yellow coloration. Accordingly, Ti is also essentially not contained in the glass of mode 1 of the present invention.

Although F has the effect of lowering the viscosity of the glass and enhancing melt properties, the damage inflicted on the environment by gas generated in the melt is great, necessitating a large-scale purifying facility to remove the generated fluorine gas. Further, volatization of fluorine in the melt tends to change the viscosity and thermal characteristics of the glass. Thus, F is desirably not incorporated in the glass of mode 1 of the present invention.
Due to their effects on the environment, both Cd and Cr are desirably not incorporated into the glass of mode 1 of the present invention.

The above-stated desirable ranges of the contents of each of the components may be combined in any fashion. The preferred composition ranges are: an SiO₂ content of from 55 to 65 %; an Al₂O₃ content of 0 to 2 %; an Li₂O content of from 0 to 5 %; an Na₂O content of from 5 to 15 %; a K₂O content of from 5 to 15 %; a combined content of Li₂O, Na₂O, and K₂O of from 15 to 25 %; a ZnO content of from 13 to 18 %, and a CeO₂ content of from 1.5 to 3.5 %.
Within a given compositional range, the combined content of SiO₂, Al₂O₃, Li₂O, Na₂O, K₂O, ZnO, and CeO₂ desirably exceeds 95 %, preferably exceeds 98 %, and is more preferably 99 % or greater. Sb₂O₃ is desirably incorporated in a quantity of 0 to 1 % as a refining agent. It is particularly desirable for the combined quantity of SiO₂, Na₂O, K₂O, ZnO, CeO₂ and Sb₂O₃ to constitute 100 %.

The optical properties of the glass of mode 1 of the present invention will be described next.
JIS B7113 prescribes the various properties of a photographic sharpcut glass filter as follows:
(1) High transmission range and high transmission threshold wavelength: The wavelength range at which filter transmittance is 72 % or above is referred to as the high transmission range and the wavelength corresponding to the threshold is referred to as the high transmission threshold wavelength of the filter.
(2) Absorption range and absorption threshold wavelength: The wavelength range at which the transmittance of the filter is less than or equal to 5 % is referred to as the filter absorption range and the wavelength corresponding to the threshold is referred to as the filter absorption threshold wavelength.
(3) Wavelength inclination range: The interval between the high transmission threshold wavelength and absorption threshold wavelength in the spectral transmittance of the filter.
(4) Transmission threshold wavelength: The wavelength corresponding to the midpoint of the wavelength inclination range.
(5) Filter hue: A transmission threshold wavelength of less than or equal to 420 nm (a numeric value obtained in units of 10 nm according to the provisions of JIS Z8401) is referred to as "colorless".

The glass of the sharpcut filter of the present invention has a wavelength (corresponding to the "transmission threshold wavelength" described in JIS B7113) falling within a range of 365 to 385 nm at the midpoint between the wavelength (corresponding to the "absorption threshold wavelength" described in JIS B7113) at which the spectral transmittance of wavelengths from 200 to 700 nm as converted for a thickness of 2.5 mm is 5 % and the wavelength (corresponding to the "high transmission threshold wavelength" described in JIS B7113) at which the spectral transmittance is 72 %. The interval (corresponding to the "wavelength inclination range" described in JIS B7113) of the wavelength at which the spectral transmittance is 5 % and the wavelength at which it is 72 % is desirably less than or equal to 35 nm. The spectral transmittance includes reflection loss on the glass surface. Having a transmission threshold wavelength falling within a range of from 365 to 385 nm effectively blocks ultraviolet radiation. Having a wavelength inclination range of less than or equal to 35 nm provides good sharpcut properties.
The glass of mode 1 of the present invention having the above-stated optical characteristics provides a sharpcut filter in which the hue according to JIS B 113 is colorless (that is, the transmission threshold wavelength is less than or equal to 420 nm).

### (Mode 2)

The glass of mode 2 of the present invention, a sharpcut filter glass incorporating CeO₂ and ZnO and having a hue according to JIS B7113 that is colorless, is characterized by a CeO₂ content of greater than or equal to 1 wt%, a ZnO content of greater than or equal to 8 wt%, by essentially not comprising Pb, As and Ti. The glass of mode 2 of the present invention may comprise SiO₂ and an alkali metal oxide.

The composition of the glass of mode 2 of the present invention will be described. In the description given below, the quantities of the various components are expressed as weight percentages.
CeO₂ is an essential component for absorbing ultraviolet radiation. In the glass of mode 2, CeO₂ is incorporated in a quantity of greater than or equal to 1 wt% to achieve a hue that is colorless according to JIS B7113 and to achieve the desired transmission threshold wavelength. The CeO₂ content may be determined in consideration of the desired transmission threshold wavelength and sharpcut properties. In the glass of mode 2, the CeO₂ content is desirably from 1 to 5 % and preferably from 1.5 to 3.5 %.

ZnO is a component that complements absorption by CeO₂ while ensuring transmittance over the visible light range, and effectively enhances the melt moldability, resistance to devitrification, and chemical durability of the glass without the incorporation of PbO. In the glass of mode 2, the content of ZnO is greater than or equal to 8 wt% to achieve the above-stated effects. The ZnO content may be set so that the hue of the glass becomes colorless according to JIS B7113 and in consideration of desired optical characteristics, and in consideration of the melt moldability, resistance to devitrification, chemical resistance, and mechanical strength of the glass. Since the incorporation of a large quantity of ZnO tends to reduce the mechanical strength of the glass that is obtained, such must be taken into account when determining the ZnO content. In the glass of mode 2, the ZnO content is desirably from 8 to 20 %, preferably from 13 to 18 %.

In the glass of mode 2, oxides other than CeO₂ and ZnO may be incorporated to the extent that the hue is colorless according to JIS B7113. For example, SiO₂ and alkali metal oxides may be incorporated.
SiO₂ is a basic component of glass that is important for enhancing the thermal stability and chemical durability of the glass. The content of SiO₂ in the glass of mode 2 may be determined in consideration of the desired thermal stability and chemical durability. In the glass of mode 2, the SiO₂ content is desirably from 50 to 70 %, preferably from 55 to 65 %.

Alkali metal oxides are components that enhance the melt property and moldability of the glass. Examples of alkali metal oxides that are suitable for use are Li₂O, Na₂O, and K₂O. The content of alkali metals is suitably set to obtain a glass of desired melt property and moldability. In the glass of mode 2, the content of alkali metal oxides is desirably from 10 to 30 %, preferably from 15 to 25 %.

In the glass of mode 2, Al₂O₃ can be incorporated in addition to SiO₂ and alkali metal oxides. Al₂O₃ is an effective component for preventing phase separation and devitrification of the glass. As in the glass of mode 1 set forth above, the glass of mode 2 of the present invention can contain Al₂O₃. The Al₂O₃ content can be determined in consideration of the desired melt moldability. The content of Al₂O₃ is desirably from 0 to 5 %, preferably from 0 to 2 %.

As in the glass of mode 1 set forth above, optional components in the form of B₂O₃, Sb₂O₃, ZrO₂, SnO₂, MgO, CaO, SrO, and BaO may also be suitably employed in the glass of mode 2 within a range of less than 5 % to enhance melt moldability, improve chemical durability, enhance refining and resistance to devitrification, adjust transmittance, and the like.

As in the glass of mode 1, the glass of mode 2 essentially does not comprise Pb or As due to their environmental effects. Further, for the same reasons given for the glass of mode 1 above, the glass of mode 2 of the present invention essentially does not comprise Ti. As in the glass of mode 1, the glass of mode 2 of the present invention desirably does not comprise F, and the incorporation of Cd and Cr is undesirable in consideration of their environmental effects.

The desirable composition range of the glass of mode 2 of the present invention is: 50 to 70 % of SiO₂; 0 to 5 % of Al₂O₃; 0 to 10 % of Li₂O; 0 to 20 % of Na₂O; 0 to 20 % of K₂O; 10 to 30 % of Li₂O, Na₂O, and K₂O combined; 8 to 20 % of ZnO; and 1 to 5 % of CeO₂. The preferred composition range is 55 to 65 % of SiO₂; 0 to 2 % of Al₂O₃; 0 to 5 % of Li₂O; 5 to 15 % of Na₂O; 5 to 15 % of K₂O; 15 to 25 % of Li₂O, Na₂O, and K₂O combined; 13 to 18 % of ZnO; and 1.5 to 3.5 % of CeO₂. In both of these ranges, the combined content of SiO₂, Al₂O₃, Li₂O, Na₂O, K₂O, ZnO, and CeO₂ is desirably greater than 95 %, preferably greater than 98 %, and more preferably greater than or equal to 99 %. A 0 to 1 % quantity of Sb₂O₃ is desirably incorporated as a refining agent. It is particularly desirable for the combined quantity of SiO₂, Na₂O, K₂O, ZnO, CeO₂, and Sb₂O₃ to be 100 %.

The glass of mode 2 of the present invention is for use in sharpcut filters with a colorless hue (that is, a transmission threshold wavelength of less than or equal to 420 nm) according to JIS B7113, as stated above. The desirable ranges of the optical characteristics of the glass of mode 2 of the present invention are identical to those described for mode 1.

The glasses of modes 1 and 2 of the present invention desirably have water resistance of grade 1, which is defined in "Method 06 (Powder Method) for Measuring the Optical Durability of Optical Glass" of the Japan Optical Glass Industry Association Standards as weight reduction of less than 0.05 wt%. They further also have acid resistance of grade 1, defined by the above-cited standard as weight reduction of less than 0.20 wt%.
Still further, the glass of mode 1 of the present invention desirably exhibits no liquid phase temperature. Here, the phrase "exhibits no liquid phase temperature" means that the glass does not devitrify (crystallize). The glass of mode 1 desirably exhibits no liquid phase temperature (does not devitrify) so as to permit various glass molding (such as pressed articles, blocks, and sheets) at any freely selected temperature.

The method of manufacturing the glass of the present invention is not specifically limited. Conventional methods may be employed. For example, glass starting materials in the form of oxides, hydroxides, carbonates, nitrates, chlorides, and sulfides may be suitably weighed out so as to yield a desired composition and mixed to obtain a blended starting material. This is then charged to a heat-resistance crucible, melted at a temperature of about 1,300 to 1,450°C for example, stirred, and refined to obtain homogeneous glass melt. The glass melt is then cast in a molding frame and glass blocks are formed. The blocks are transferred to a furnace that has been heated to close to the annealing point of the glass, where they are cooled to room temperature to obtain the glass of the present invention.

The present invention also relates to sharpcut filters comprised of the glasses of modes 1 and 2 of the present invention. The shape of the sharpcut filter is not specifically limited, but may be platelike. The sharpcut filter of the present invention desirably has a transmission threshold wavelength falling within a range of from 365 to 385 nm and a wavelength inclination range of less than or equal to 35 nm according to JIS B7113.

The method of manufacturing the sharpcut filter of the present invention is not specifically limited. For example, glass that has been prepared by the above-described manufacturing method can be processed into desired shape and size and the surface thereof optically polished to obtain the sharpcut filter of the present invention. As needed, the surface can be coated.
The present invention thus provides environmentally sound sharpcut filter glass not containing harmful components, and a sharpcut filter.

### [Embodiments]

The present invention is further described below through embodiments. (Embodiments 1 to 5, Comparative Examples 1 and 2)
Blended starting materials obtained by weighing out and mixing starting materials such as oxides, hydroxides, carbonates, nitrates, chlorides, and sulfides so as to yield the glasses of the composition of Table 1 (numbers denoting relative quantities of each component are given for Comparative Example 2) were charged to a heat-resistant crucible such as a platinum crucible, heated in air to 1,300 to 1,450°C, melted, stirred, homogenized, refined, and then made to flow into a casting mold. When the glass had solidified, it was transferred to an electric furnace that had been heated to close to the annealing point of the glass, and then gradually cooled to room temperature.
Table 1 gives the glass composition and various measurement data. Fig. 1 shows the transmittance of the glasses of Embodiment 1 and Comparative Examples 1 and 2. Transmittance was measured with a spectrophotometer at 200 to 700 nm for the above glasses after polishing both surfaces to a thickness of 2.5 mm. The transmission threshold wavelength and the wavelength inclination range were calculated from the measured transmittance.

**[Table 1]**

| | Emb. 1 | Emb. 2 | Emb. 3 | Emb. 4 | Emb. 5 | Comp. Ex. 1 | Comp. Ex. 2 |
|---|---|---|---|---|---|---|---|
| SiO₂ (wt%) | 65.0 | 60.0 | 55.0 | 67.0 | 62.0 | 52.3 | 70.0 |
| Al₂O₃ (wt%) | 0.0 | 0.0 | 2.0 | 0.0 | 0.0 | 0.0 | 2.0 |
| Li₂O (wt%) | 0.0 | 0.0 | 0.0 | 0.0 | 0.3 | 0.0 | 0 |
| Na₂O (wt%) | 6.0 | 8.0 | 13.0 | 15.0 | 10.0 | 5.0 | 8.1 |
| K₂O (wt%) | 10.0 | 13.0 | 10.8 | 2.7 | 7.0 | 7.0 | 0 |
| CaO (wt%) | 0.0 | 0.0 | 1.0 | 0.0 | 0.0 | 1.0 | 0 |
| SrO (wt%) | 0.0 | 0.0 | 2.0 | 0.0 | 0.0 | 0.0 | 0 |
| BaO (wt%) | 0.0 | 0.0 | 2.0 | 0.0 | 0.0 | 0.0 | 0 |
| ZnO (wt%) | 15.2 | 16.3 | 10.0 | 12.0 | 16.0 | 0.0 | 2.9 |
| PbO (wt%) | 0.0 | 0.0 | 0.0 | 0.0 | 0.0 | 33.0 | 0 |
| TiO₂ (wt%) | 0.0 | 0.0 | 0.0 | 0.0 | 0.0 | 0.0 | 0 |
| CeO₂ (wt%) | 3.6 | 2.5 | 4.0 | 3.1 | 4.5 | 1.5 | 1.4 |
| Sb₂O₃ (wt%) | 0.2 | 0.2 | 0.2 | 0.2 | 0.2 | 0.2 | 13.5 |
| B₂O₃ (wt%) | -- | -- | -- | -- | -- | -- | 9.3 |
| Total (wt%) | 100 | 100 | 100 | 100 | 100 | 100 | |
| Transmission threshold wavelength (nm) | 368 | 369 | 377 | 372 | 379 | 370 | 370 |
| Wavelength inclination range (nm) | 22 | 23 | 26 | 24 | 28 | 28 | 29 |
| Water resistance (grade) | 1 | 1 | 1 | 1 | 1 | 2 | 1 |
| Acid resistance (grade) | 1 | 1 | 1 | 1 | 1 | 1 | 1 |

Comparative Example 1 is a glass containing PbO that should be excluded due to environmental problems. Comparative Example 2 is a glass containing cerium oxide but not PbO relating to the invention described in Japanese Unexamined Patent Publication (KOKAI) No. 2001-89185. As shown in Fig. 1, the glass of Embodiment 1 exhibited higher transmittance than either Comparative Example 1 or 2 in the high transmission range despite the elimination of PbO.

The water resistance and acid resistance of each of the glasses were then measured by the methods defined in "Method 06 (Powder Method) for Measuring the Optical Durability of Optical Glass" of the Japan Optical Glass Industry Association Standards. The glasses of Embodiments 1 to 5 exhibited water resistance in the form of a weight reduction of less than 0.05 wt% and acid resistance in the form of a weight reduction of less than 0.20 wt%. These values all corresponded to grade 1 in the above-cited standards. Based on these results, the glasses of Embodiments 1 to 5 were found to have extremely high water resistance and acid resistance when employed in sharpcut filters. No liquid phase temperature was observed in any of the glasses of Embodiments 1 to 5.

The glasses of Embodiments 1 to 5 were then machined into plates 2.5 mm in thickness and polished on both surfaces to obtain sharpcut filters. These filters were colorless in hue according to JIS B7113. Coatings can also be applied as needed to the surfaces of such sharpcut filters.

The present invention provides environmentally sound sharpcut filter glass not containing harmful components that must be eliminated due to their environmental effects, and sharpcut filters.

## Claims

1. A sharpcut filter glass **characterized by** comprising, given as weight percentages:
| | |
|---|---|
| SiO₂ | 50 to 70 %, |
| Al₂O₃ | 0 to 5 %, |
| Li₂O | 0 to 10 %, |
| Na₂O | 0 to 20 %, |
| K₂O | 0 to 20 %, |
| (where Li₂O + Na₂O + K₂O comprises 10 to 30 %) | |
| ZnO | 8 to 20 %, |
| CeO₂ | 1 to 5 % |
and by essentially not comprising Pb, As, and Ti.

2. The sharpcut filter glass according to claim 1, wherein the wavelength corresponding to the midpoint between the wavelength at which the spectral transmittance over the wavelengths of from 200 to 700 nm as calculated based on a thickness of 2.5 mm becomes 5 % and the wavelength at which this spectral transmittance becomes 72 % falls within a range of from 365 to 385 nm, and the interval between the 5 % and 72 % spectral transmittance wavelengths is less than or equal to 35 nm.

3. A sharpcut filter glass comprising CeO₂ and ZnO and having a hue according to JIS B7113 that is colorless, **characterized in that** the content of CeO₂ is greater than or equal to 1 wt%, the content of ZnO is greater than or equal to 8 wt%, and essentially no Pb, As, and Ti is contained.

4. The sharpcut filter glass according to claim 3, comprising SiO₂ and an alkali metal oxide.

5. A sharpcut filter **characterized by** being comprised of any of the glasses according to claims 1 to 4.

6. The sharpcut filter according to claim 5 **characterized in that**, according to JIS B7113, the transmission threshold wavelength falls within a range of from 365 to 385 nm and the wavelength inclination range is less than or equal to 35 nm.
